(19) Europäisches Patentamt
European Patent Office
Office européen des brevets

(11) **EP 1 933 308 B1**

(12) **EUROPEAN PATENT SPECIFICATION**

(45) Date of publication and mention
of the grant of the patent:
**16.02.2011 Bulletin 2011/07**

(51) Int Cl.:
***G11B 7/0045*** *(2006.01)*    ***G11B 7/244*** *(2006.01)*

(21) Application number: **07254865.4**

(22) Date of filing: **13.12.2007**

(54) **Optical information recording device and optical information recording method**

Optische Informationsaufzeichnungsvorrichtung und optisches Informationsaufzeichnungsverfahren

Dispositif d'enregistrement des informations optiques et procédé d'enregistrement d'informations optiques

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 JP 2006338165**
**10.05.2007 JP 2007125615**

(43) Date of publication of application:
**18.06.2008 Bulletin 2008/25**

(73) Proprietor: **TAIYO YUDEN CO., LTD.**
**Tokyo 110-0005 (JP)**

(72) Inventors:
• **Miyazawa, Fuyuki**
**Taito-ku**
**Tokyo, 110-0005 (JP)**
• **Sekiguchi, Mitsuo**
**Taito-ku**
**Tokyo, 110-0005 (JP)**
• **Oyama, Katsuhiro**
**Taito-ku**
**Tokyo, 110-0005 (JP)**
• **Kakimoto, Hiraya**
**Taito-ku**
**Tokyo, 110-0005 (JP)**

(74) Representative: **Jackson, Richard Eric et al**
**Carpmaels & Ransford**
**One Southampton Row**
**London**
**WC1B 5HA (GB)**

(56) References cited:
**EP-A- 1 863 026**     **WO-A-2004/013846**
**US-A1- 2002 051 416**     **US-A1- 2005 169 148**
**US-A1- 2005 213 467**     **US-A1- 2006 223 004**

**Description**

BACKGROUND OF THE INVENTION

FIELD OF THE INVENTION

The present invention relates to an optical information recording device, an optical information recording method, and an optical information recording medium that permit recording of information in an optical information recording medium for high-density recording and reproduction (hereinafter, simply, an optical information recording medium) which is writable using a laser called a blue-purple laser or a blue laser.

DESCRIPTION OF THE RELATED ART

Optical disks for high-density recording and reproduction including a write-once type Blu-ray disk (BD-R) or a write-once type HD-DVD disk (HD-DVD-R) have a structure that a recording layer, a reflective layer, and, if necessary, a protective layer are formed on one side of an optical-transparency disk substrate. Moreover, spiral or concentric grooves each of which is called simply a groove are formed in the side of the substrate in which the recording layer and reflective layer are formed. An interspace between adjoining grooves is formed as a convex part called a land. In this type of optical information recording medium, an optical information recording device is used to irradiate laser light for recording to the recording layer on the grooves while tracking each groove for the purpose of forming pits (hereinafter, referred to as record marks). Recording is thus achieved. In the thus recorded optical information recording medium, the length nT of each record mark (where T denotes the cycle of a reference channel clock, and nT denotes an n multiple of the cycle) and a length nT between adjoining pits (hereinafter, a space) are repeated. Laser light for reproduction is irradiated to the array of record marks and spaces, and reflected light is converted into a reproduced signal in order to achieve reproduction.

When a signal is recorded in an optical information recording medium as a code including record marks and spaces, pulses of laser light for recording are controlled in units of a pulse train composed of multiple short pulses. Among record marks having lengths of nT, for example, for a short record mark having a length of 2T, a pulse pattern of a single pulse is often employed. Moreover, when long record marks having, for example, lengths of 4T or more are written so that they will have a certain width, a pulse pattern of multiple short split pulses is often employed. Thus, the pulses of laser light for recording are controlled in order to suppress an adverse effect of thermal accumulation or thermal diffusion on a recording surface of an optical information recording medium so as to further improve recording precision. A method of handling recording pulses as modulated light is referred to as a writing strategy.

According to a known method (refer to, for example, a patent document 1 (JP-A-2003-323717), the pulse power (intensity of laser light) of laser light for recording that is handled according to the writing strategy is changed between writing power required for forming record marks and bias power. The level of the bias power is made lower than the level of read power required for reproducing the record marks.

On the other hand, in other information recording devices, based on an asymmetry or a current-transfer ratio ($\beta$) of a radiofrequency (RF) signal obtained by reproducing information recorded in an optical information recording medium, writing power is changed from one level to another so that a data-to-clock (DC) jitter (a fluctuation in the direction of a time base of a digital signal, hereinafter, simply, a jitter) that is a standard deviation of a phase difference between a binary RF signal produced by binary-coding the RF signal and a clock signal produced from the binary RF signal will be equal to or smaller than 8.0 % or any recording characteristic will be appropriate.

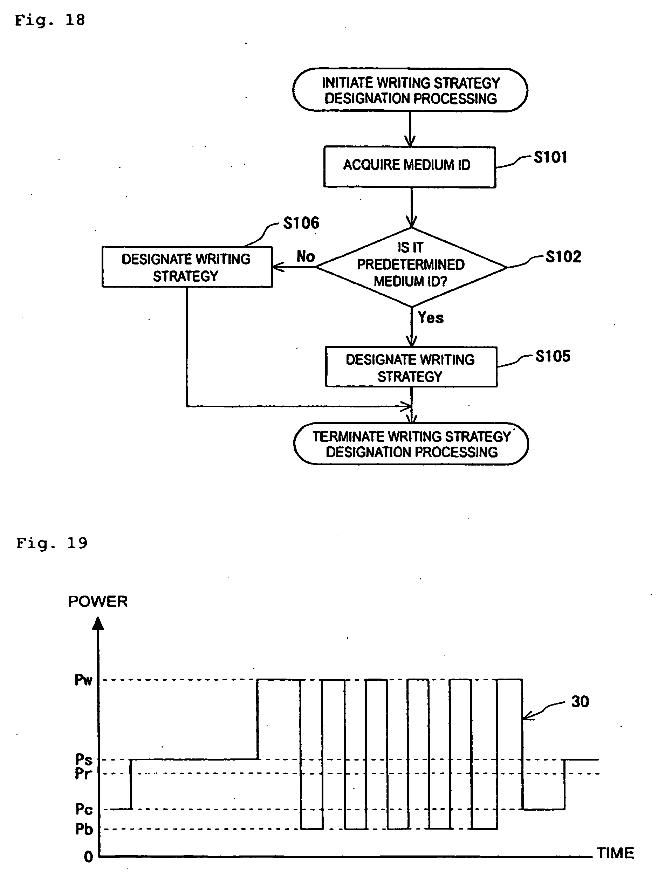

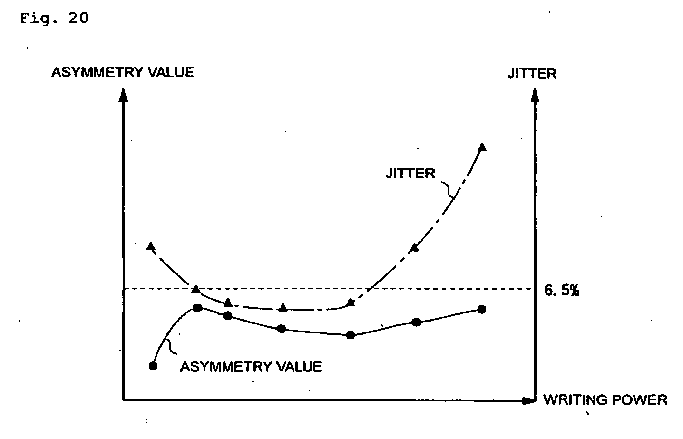

An optical information recording device employing a laser that oscillates with a wavelength of 405 nm or so (hereinafter, a blue-purple laser) and an optical information recording medium (hereinafter, simply, an optical disk) compatible with the blue-purple laser will be discussed on the assumption that recording pulses 30 for which bias power Pb shall be, as shown in Fig. 19, set to a level lower than the level of read power Pr are handled according to the writing strategy in order to record information in the optical disk for which an organic dye whose absorption spectrum includes a wavelength of 405 nm is used. In this case, since the sensitivity of the organic dye used for the optical disk is lower than that employed for a CD or a normal DVD, when writing power Pw is changed from one level to another, a change in the amplitude of an RF signal derived from the shortest record mark may be approximately a half of the amplitude thereof derived from the longest record mark. Incidentally, a measured value of an asymmetry (hereinafter, an asymmetry value) expresses the symmetry between the amplitude of an RF signal derived from the shortest record mark and shortest space and the amplitude thereof derived from the longest record mark and longest space. Consequently, as shown in Fig. 20, a phenomenon in which although a jitter (recording characteristic) is appropriate, a width of a change in an asymmetry value is small for a change in the writing power Pw, and has an extreme value in relation to a domain of low levels of the writing power Pw may take place.

When information is recorded, if a disturbance derived from a difference in a film thickness of an organic dye, a thickness of a reflective film, a thickness of a plate, or a warp of an optical disk between the outer portion of the optical disk and the inner portion thereof, a change in the temperature of a laser diode, or a disturbance due to driving such as a servo operation takes place, an asymmetry value of an RF signal or a measured value of a current transfer ratio β (hereinafter, β value) hardly varies. Consequently, the writing power Pw cannot be controlled based on the asymmetry value or β value of the RF signal. This poses a problem in that the recording characteristic may be degraded, recording in an optical disk may be ceased, or recorded information cannot be reproduced.

A known prior art is US 2006/223004 A1 used for the two-part-delimitation of the claims.

SUMMARY OF THE INVENTION

The invention is defined by the appended claims.

The present invention addresses the foregoing problem. An object of the present invention is to provide an optical information recording device, an optical information recording method, and an optical information recording medium which provide an appropriate recording characteristic even when a disturbance occurs during information recording.

A first technological means of the present invention is an optical information recording device that forms record marks and spaces by irradiating blue-purple laser light to an optical information recording medium for which an organic dye that exhibits a specific absorption factor with respect to light having a wavelength of 405 nanometers (nm) is used, and that thus records information. The optical information recording device includes a recording power control means that, when information is recorded, controls the power of blue-purple laser light using writing power Pw required for forming the record marks, space formation power Ps required for forming spaces, and bias power Pb higher than read power Pr required for reproducing information recorded in the optical information recording medium. Thus, the aforesaid object is accomplished.

According to the first technological means, during information recording, the writing power Pw, space formation power Ps, and bias power Pb are used to control the power of blue-purple laser light. An asymmetry value indicates a degree of a difference between an amplitude center of a reproduced signal derived from the shortest record mark and shortest space and an amplitude center thereof derived from the longest record mark and longest space. As long as the bias power Pb is made higher than the read power Pr, when the writing power Pw is changed from one level to another, even if the writing power Pw is low, the longest record mark can be readily formed. Along with a change in the writing power Pw, the amplitude derived from the longest space does not vary but the amplitude derived from the longest record mark varies. Consequently, the amplitude center derived from the longest record mark and longest space changes from one level to another. Moreover, along with the change in the writing power Pw, the asymmetry value exhibits a linear functional monotonous change. Even when a disturbance occurs during information recording, an appropriate recording characteristic can be provided by changing the writing power Pw from one level to another.

Herein, the asymmetry value indicates a degree of a difference between the amplitude center of a reproduced signal derived from the shortest record mark and shortest space and the amplitude center thereof derived from the longest record mark and longest space. As long as the bias power Pb is made higher than the read power Pr, when the writing power Pw is changed from one level to another, although the writing power Pw is low, the longest record mark can be readily formed. Along with a change in the writing power Pw, the amplitude derived from the longest space does not vary but the amplitude derived from the longest record mark varies. Consequently, the amplitude center derived from the longest record mark and longest space changes from one level to another, and the asymmetry value exhibits a linear functional monotonous change along with the change in the writing power Pw.

A second technological means of the present invention is an optical information recording method for forming record marks and spaces by irradiating blue-purple laser light to an optical information recording medium for which an organic dye exhibiting a predetermined absorption factor with respect to light having a wavelength of 405 nm is used, and thus recording information. When information is recorded, the power of blue-purple laser light is controlled using writing power Pw required for forming the record marks, space formation power Ps required for forming spaces, and bias power Pb higher than read power required for reproducing information recorded in the optical information recording medium. Thus, the aforesaid object is accomplished.

According to the second technological means, for information recording, the power of blue-purple laser light is controlled using the writing power Pw, space formation power Ps, and bias power Pb. An asymmetry value indicates a degree of a difference between an amplitude center of a reproduced signal derived from the shortest record mark and shortest space and an amplitude center thereof derived from the longest record mark and longest space. As long as the bias power Pb is made higher than the read power Pr, when the writing power Pw is changed from one level to another, even if the writing power Pw is low, the longest record mark can be readily formed. Consequently, along with a change in the writing power Pw, the amplitude derived from the longest space does not vary but the amplitude derived from the longest record mark varies. Consequently, the amplitude center derived from the longest record mark and longest space changes from one level to another, and the asymmetry value exhibits a linear functional monotonous change along with the change in the writing power Pw. Eventually, even when a disturbance occurs during information recording, an appropriate recording characteristic can be provided by changing the writing power Pw from one level to another.

Herein, the asymmetry value indicates a degree of a difference between the amplitude center of a reproduced signal derived from the shortest record mark and shortest space and the amplitude center thereof derived from the longest record mark and longest space. As long as the bias power is made higher than the read power Pr, when the writing power Pw is changed from one level to another, even if the writing power Pw is low, the longest record mark can be readily formed. Along with a change in the writing power Pw, the amplitude derived from the longest space does not vary but the amplitude derived from the longest record mark varies. Consequently, the amplitude center derived from the longest record mark and longest space changes from one level to another, and the asymmetry value exhibits a linear functional monotonous change along with the change in the writing power.

Further, a third technological means of the present invention is an optical information recording medium for which an organic dye exhibiting a predetermined absorption factor with respect to light having a wavelength of 405 nm is used, and to which blue-purple laser light is irradiated from an optical information recording device in order to form record marks and spaces so as to thus record information. Power information based on which the optical information recording device controls the power of blue-purple laser light for recording of information using writing power Pw required for forming record marks, space formation power Ps required for forming spaces, and bias power Pb higher than read power Pr required for reproducing information recorded in the optical information recording medium is recorded in advance. Consequently, the aforesaid object is accomplished.

According to the third technological means, for information recording, the power of blue-purple laser light is controlled using the writing power Pw, space formation power Ps, and bias power Pb. An asymmetry value indicates a difference between an amplitude center of a reproduced signal derived from the shortest record mark and shortest space and an amplitude center thereof derived from the longest record mark and longest space. As long as the bias power Pw is made higher than the read power Pr, when the writing power Pw is changed from one level to another, even if the writing power Pw is low, the longest record mark can be readily formed. Consequently, along with a change in the writing power Pw, the amplitude derived from the longest space does not vary but the amplitude derived from the longest record mark varies. Accordingly, the amplitude center derived from the longest record mark and longest space changes from one level to another, and the asymmetry value exhibits a linear functional monotonous change along with the change in the writing power Pw. Even when a disturbance occurs during information recording, an appropriate recording characteristic can be provided by changing the writing power Pw from one level to another.

Herein, the asymmetry value indicates a degree of a difference between the amplitude center of a reproduced signal derived from the shortest record mark and shortest space and the amplitude center thereof derived from the longest record mark and longest space. As long as the bias power Pw is made higher than the read power Pr, when the writing power Pw is changed from one level to another, even if the writing power Pw is low, the longest record mark can be readily formed. Consequently, along with a change in the writing power, the amplitude derived from the longest space does not vary but the amplitude derived from the longest record mark varies. Accordingly, the amplitude center derived from the longest record mark and longest space changes from one level to another, and the asymmetry value exhibits a linear functional monotonous change along with the change in the writing power Pw.

BRIEF DESCRIPTION OF THE DRAWINGS

Fig. 1 is a schematic block diagram of an optical information recording device;

Fig. 2 is a plan view for use in explaining an optical disk shown in Fig. 1;

Fig. 3 is a conceptual diagram showing the amplitude of a reproduced signal derived from the shortest record mark and shortest space and the amplitude thereof derived from the longest record mark and longest space;

Fig. 4 is a conceptual diagram for use in explaining recording pulses produced by a strategy circuit shown in Fig. 1;

Fig. 5A and Fig. 5B are conceptual diagrams for use in explaining recording pulses needed to form the shortest record mark;

Fig. 6A and Fig. 6B are conceptual diagrams for use in explaining recording pulses needed to form the second shortest record mark that ranks next to the shortest record mark;

Fig. 7 is a flowchart describing writing strategy designation processing;

Fig. 8 is a conceptual diagram for use in explaining a change in the amplitude center of a reproduced signal derived from the shortest record mark and shortest space;

Fig. 9 is a graph expressing the relationship among writing power, an asymmetry value, and a jitter in the present invention;

Fig. 10 is a conceptual diagram showing another example of the recording pulses shown in Fig. 4;

Fig. 11 is a conceptual diagram showing another example of the writing strategy shown in Fig. 4;

Fig. 12 is a conceptual diagram for use in explaining a β value of a reproduced signal;

Fig. 13 is a graph of measured values expressing changes in a DCJ % and an asymmetry value to a change in writing power Pw in a case where the level of bias power is 0.4 mW;

Fig. 14 is a graph of measured values expressing the changes in the DCJ % and asymmetry value to the change in writing power Pw in a case where the level of bias power is 0.3 mW;

Fig. 15 is a graph of measured values expressing the changes in the DCJ % and asymmetry value to the change in writing power Pw in a case where the level of bias power is 0.1 mW;

Fig. 16 is a graph expressing the relationship between bias power and writing power;

Fig. 17 is a schematic block diagram of an optical information recording device;

Fig. 18 is a flowchart describing writing strategy designation processing;

Fig. 19 is a conceptual diagram for use in explaining recording pulses in a related art; and

Fig. 20 is a graph expressing the relationship among writing power, an asymmetry value, and a jitter in the related art.

DESCRIPTION OF THE PREFERRED EMBODIMENTS

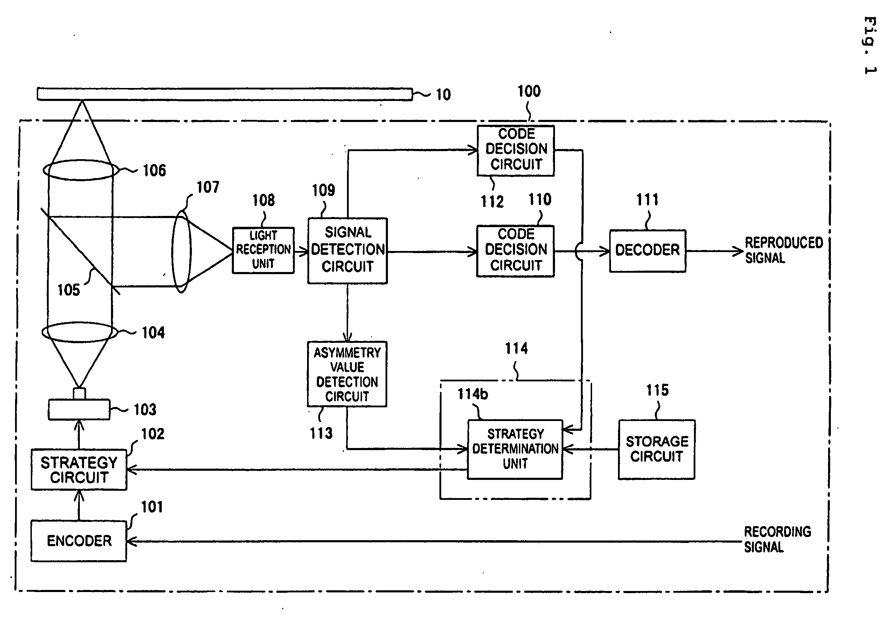

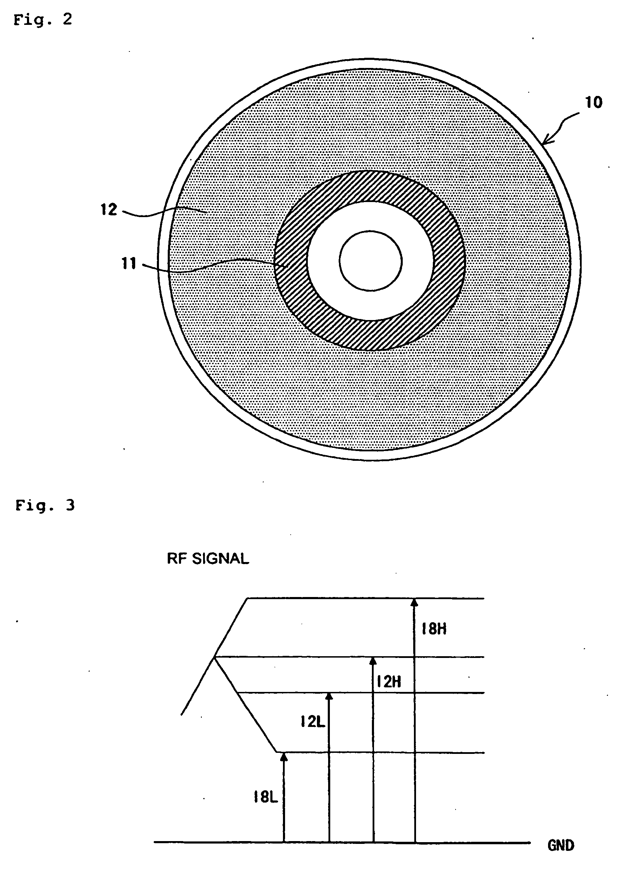

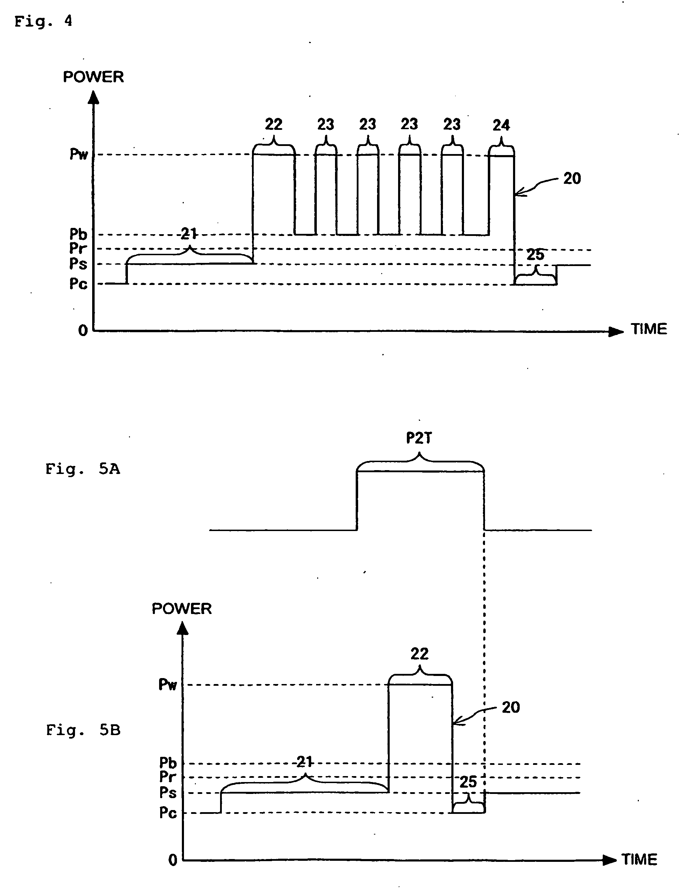

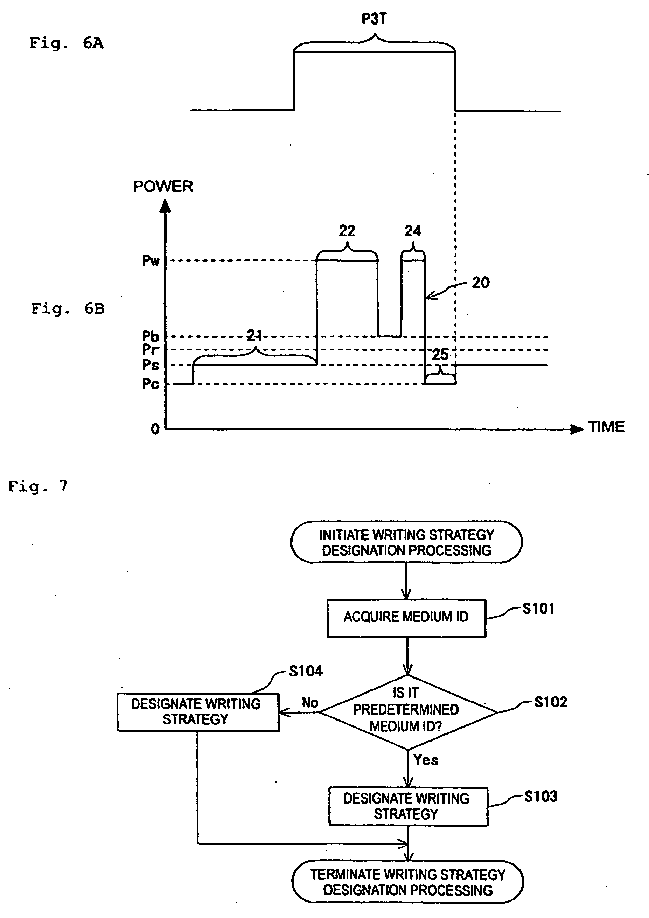

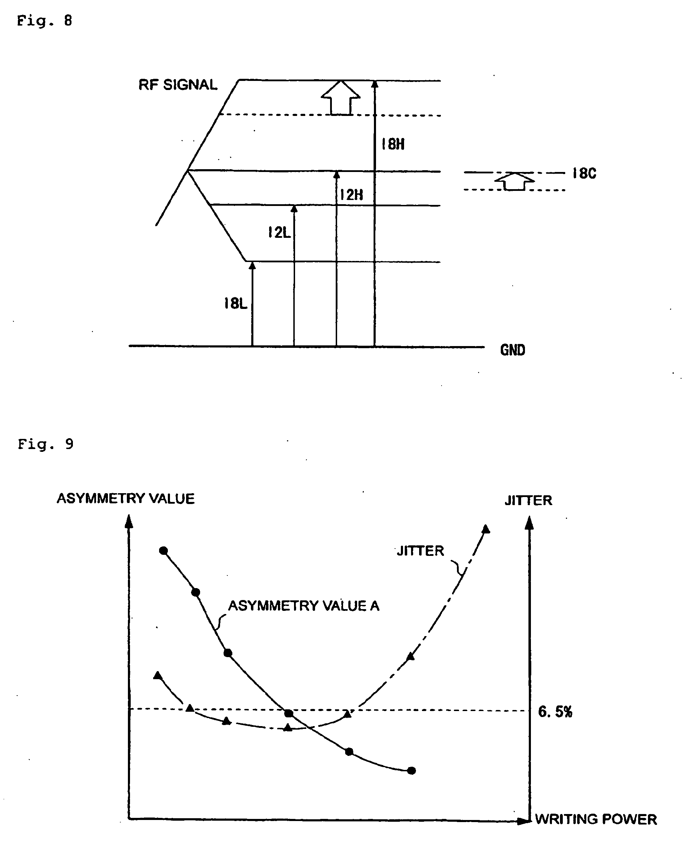

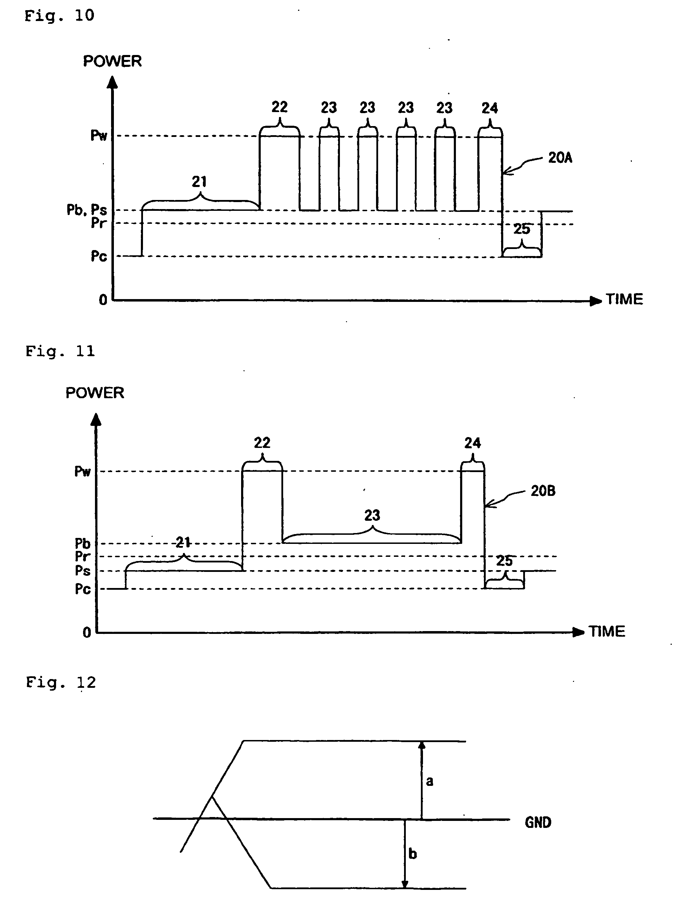

Fig. 1 to Fig. 12 show the first embodiment of the present invention. Fig. 1 is a schematic block diagram of an optical information recording device. Fig. 2 is a plan view for use in explaining an optical disk shown in Fig. 1. Fig. 3 is a conceptual diagram showing the amplitude of a reproduced signal derived from the shortest record mark and shortest space, and the amplitude thereof derived from the longest record mark and longest space. Fig. 4 is a conceptual diagram for use in explaining recording pulses produced by a strategy circuit shown in Fig. 1. Fig. 5 is a conceptual diagram for use in explaining recording pulses needed to form the shortest record mark. Fig. 6 is a conceptual diagram for use in explaining recording pulses needed to form the second shortest record mark that ranks next to the shortest record mark. Fig. 7 is a flowchart describing writing strategy designation processing. Fig. 8 is a conceptual diagram for use in explaining a change in the amplitude center of a reproduced signal derived from the shortest record mark and shortest space. Fig. 9 is a graph expressing the relationship between writing power and an asymmetry value in the present invention. Fig. 10 is a conceptual diagram showing another example of the recording pulses shown in Fig. 4. Fig. 11 is a conceptual diagram showing another example of a writing strategy shown in Fig. 4. Fig. 12 is a conceptual diagram for use in explaining a β value of a reproduced signal.

As shown in Fig. 1, an optical information recording device (hereinafter, simply, a drive) 100 includes an encoder 101, a strategy circuit 102, a laser oscillator 103, a collimator lens 104, a half mirror 105, an objective lens 106, a condenser lens 107, a light reception unit 108, a signal detection circuit 109, a code decision circuit 110, a decoder 111, a code decision circuit 112, an asymmetry value detection circuit 113, a control circuit 114, and a storage circuit 115. Blue-purple laser light is irradiated to a writable optical information recording medium (hereinafter, simply, an optical disk) 10 in order to record or reproduce information.

The encoder 101 encodes a recording signal representing predetermined recording information, and transmits recording data, which is encoded according to a predetermined encoding method, for example, a 1-7PP modulation method, to the strategy circuit 102.

The strategy circuit 102 designates a writing strategy that specifies an irradiating condition for blue-purple laser light, and has various parameters for a predetermined writing strategy set therein. Based on a control signal sent from the control circuit 114 to be described later, the strategy circuit 102 corrects various parameters for the writing strategy and produces recording pulses, which would bring the optical disk 10 to a desired recorded state, on the basis of the recording data sent from the encoder 101. The strategy circuit 102 then transmits the recording pulses to the laser oscillator 103.

The laser oscillator 103 includes a blue-purple laser diode that provides a power peak for a wavelength around 405 nm. The laser oscillator 103 varies the power or pulse duration of blue-purple laser light according to recording pulses, and irradiates the resultant blue-purple laser light to the optical disk 10, which rotates with a linear or angular velocity held constant, via the collimator lens 104, half mirror 105, and objective lens 106. Thus, a record mark train composed of record marks and spaces (each of which is an interspace between adjoining record marks) is formed in a recording layer of the optical disk 10 in order to record predetermined recording information.

In contrast, when information recorded in the recording layer of the optical disk 10 is reproduced, the laser oscillator 103 irradiates blue-purple laser light of predetermined power (hereinafter, read power Pr) to the optical disk 10, which rotates with a linear or angular velocity held constant, via the collimator lens 104, half mirror 105, and objective lens 106.

The light reception unit 108 receives light reflected from the optical disk 10, to which blue-purple laser light of read power Pr has been irradiated, via the objective lens 106, half mirror 105, and condenser lens 107, converts the light into an electric signal, and transmits the electric signal to the signal detection circuit 109.

An electric signal sent from the light reception unit 108 represents a medium ID that indicates a type of optical disk and is, as shown in Fig. 2, recorded in advance in a designation area 11 on the inner circumference of the optical disk 10, and a record mark train recorded by the drive 100. The signal detection circuit 109 detects an RF signal and a wobble signal contained in the electric signal, transmits the RF signal to each of the code decision circuit 110 and an asymmetry value detection circuit 113 that will be described later, and transmits the wobble signal to the code decision circuit 112 that will be described later.

The code decision circuit 110 encodes the RF signal by performing signal processing, for example, partial response maximum likelihood (PRML), produces a clock signal of a predetermined cycle T using the encoded RF signal, and transmits the encoded RF signal to the decoder 111.

The decoder 111 performs maximum likelihood decoding on the encoded RF signal and transmits the resultant RF signal as a reproduced signal.

The code decision circuit 112 transmits the medium ID, which is contained in the wobble signal sent from the signal detection circuit 109, to the control circuit 114.

The asymmetry value detection circuit 113 detects an asymmetry value of the RF signal sent from the signal detection circuit 109, and transmits the asymmetry value to the control circuit 114.

The control circuit 114 is a known microprocessor including a CPU and a memory such as a RAM or ROM, operates based on a received signal and a program stored in advance in the own memory, and includes a strategy determination unit 114b. The strategy determination unit 114b determines a writing strategy according to which information is recorded in the optical disk 10. Based on the medium ID sent from the code decision circuit 112, data stored in the storage circuit 115, and the asymmetry value of the RF signal sent from the asymmetry value detection circuit 113, the control circuit 114 transmits a control signal to the strategy circuit 102 so that the strategy circuit 102 will produce recording pulses which brings about an appropriate recording characteristic, for example, a jitter equal to or smaller than 6.5 %.

The storage circuit 115 includes a rewritable memory element such as an EEPROM, and stores a standard recording condition that is a recording condition under which an appropriate reproduced signal is provided using a standard drive and a standard optical disk, and which is designated for each medium ID recorded in the optical disk 10.

A record mark train formed in the optical disk 10 has theoretically a length of nT (n denotes a positive integer) where T denotes a cycle of a clock signal produced by the code decision circuit 110 included in the drive 100. Multiple record marks and spaces of different lengths nT where n ranges from 2 to 8 are formed in association with each of medium IDs recorded in the optical disk 10. Recording pulses associated with each record mark and each space are designated by the strategy circuit 102. Hereinafter, unless otherwise described, record marks and spaces of lengths nT (n denotes an integer ranging from 2 to 8) are associated with each medium ID.

As shown in Fig. 3, an asymmetry value A detected by the asymmetry value detection circuit 113 is expressed by an equation (1) presented below using the amplitude 12H of an RF signal derived from the shortest record mark M2T of a length 2T, the amplitude I2L thereof derived from the shortest space S2T, the amplitude I8H thereof derived from the longest record mark M8T of a length 8T, and the amplitude I8L thereof derived from the longest space S8T.

$$A = \{(I8H+I8L) - (I2H+I2L)\} / \{2 \times (I8H-I8L)\} \ ... \ (1)$$

As shown in Fig. 4 , a writing strategy is of a multi-pulse type signifying that blue-purple laser light modulated with multiple recoding pulses 20 is used to form each record mark and each space. The recording pulses 20 include a space formation pulse 21, a top pulse 22, an intermediate pulse 23, a last pulse 24, and a cooling pulse 25.

The space formation pulse 21 has the pulse duration thereof varied in order to form each of the spaces S2T to S8T of lengths 2T to 8T between record marks. The power of the space formation pulse 21 is set to space formation power Ps. The space formation power Ps is of a level representing an intensity that is too low to permit formation of a record mark.

The top pulse 22, intermediate pulse 23, and last pulse 24 are used to form each of record marks M2T to M8T of lengths 2T to 8T by varying the pulse durations of the top pulse 22 and last pulse 24 respectively and the number of intermediate pulses 23. The power of the top pulse 22, intermediate pulse 23, and last pulse 24 is set to writing power Pw of a level permitting reliable writing of a record mark.

The cooling pulse 25 has a pulse duration rT (where r denotes a real number equal to or larger than zero) and is intended to sharpen the trailing edge of a record mark by preventing propagation of heat dissipated from the record mark. The power Pc of the cooling pulse 25 is set to a level lower than the level of the space formation power Ps. The cooling pulse Pc has the power level and pulse duration thereof adjusted to be suitable for the property of the recording layer of the optical information recording medium.

Moreover, aside from the space formation pulse 21, top pulse 22, intermediate pulse 23, last pulse 24, and cooling pulse 25 of the recording pulses 20, the powers of the pulse between the top pulse 22 and intermediate pulse 23, the pulse between the intermediate pulses 23, and the pulse between the intermediate pulse 23 and last pulse 24 are set to bias power Pb. The bias power Pb is, as mentioned above, set to a level higher than the level of read power Pr and lower than the level of writing power Pw.

Incidentally, the recording pulses 20 shown in Fig. 4 are mere examples. For example, the recording pulses 20 associated with recording data P2T shown in Fig. 5A and used to form the shortest record mark M2T of a length 2T include, as shown in Fig. 5B, the top pulse 22 alone aside from the space formation pulse 21 and cooling pulse 25. The recording pulses 20 associated with recording data P3T shown in Fig. 6A and used to form a record mark M3T of a length 3T include, as shown in Fig. 6B, the top pulse 22 and last pulse 23 alone aside from the space formation pulse 21 and cooling pulse 25. Consequently, the recording pulses 20 in the present invention should preferably include at least the space formation pulse 21, top pulse 22, and cooling pulse 25.

Herein, one concrete example of the powers shown in Fig. 4 will be presented below. Assuming that the read power Pr of, for example, 0.35 mW is regarded as a reference level, when recording is performed at a speed that is one time higher (1×) than a standard speed, if the space formation power Ps, writing power Pw, cooling power Pc, and bias power Pb are set to 0.3 mW, 4.0 mW, 0.1 mW, and 0.5 mW respectively, a preferable result would be obtained.

In a recording system including the drive 100 and optical disk 10, when predetermined recording information is recorded in a recording area 12 of the disk 10, writing strategy designation processing described in Fig. 7 is executed.

Specifically, as described in Fig. 7, when the optical disk 10 is loaded in the drive 100, the laser oscillator 103 irradiates blue-purple laser light of the read power Pr to the designation area 11 of the optical disk 10, and thus reproduces information from the designation area 11. The strategy determination unit 114b acquires a medium ID sent from the code decision circuit 112 (step S101).

Thereafter, the strategy determination unit 114b decides whether the acquired medium ID is a predetermined medium ID, that is, whether the disk loaded in the drive 100 is the optical disk 10 having an organic dye, of which absorption spectrum includes a wavelength of 405 nm, adopted for the recording layer thereof (hereinafter, an organic-dye optical disk) (step S102).

If the result of the decision of step S102 reveals that the optical disk loaded in the drive 100 is the organic-dye optical disk 10, the strategy determination unit 114b reads a standard recording condition associated with the acquired medium ID from the storage circuit 115, and transmits a control signal to the strategy circuit 102 according to the read standard recording condition. Based on the received control signal, the strategy circuit 102 designates a writing strategy signifying that the bias power Pb for the recording pulses 20 is, as shown in Fig. 4, higher than the read power Pr and lower than the writing power Pw (step S103).

The reason why the above writing strategy is designated will be described below. Herein, an asymmetry value A indicates a degree of a difference between the amplitude center of an RF signal derived from the shortest record mark M2T and shortest space S2T and the amplitude center thereof derived from the longest record mark M8T and longest space S8T. When the bias power Pb for the recording pulses 20 is made higher than the read power Pr, if the writing power Pw for the recording pulses 20 is changed from one level to another, although the writing power Pw is set to a low level, the longest record mark M8T can be readily formed. As a result, along with a change in the writing power Pw, as shown in Fig. 8, the amplitude 18L of an RF signal derived from the longest space S8T does not vary but the amplitude I8H thereof derived from the longest record mark M8T varies as indicated with an arrow. Consequently, the amplitude center 18C derived from the longest record mark M8T and longest space S8T changes as indicated with an arrow from a level indicated with a dashed line to a level indicated with a dot-dash line. Accordingly, the asymmetry value A exhibits, as shown in Fig. 9, a linear functional monotonous change along with the change in the writing power Pw. Moreover, a jitter serving as an index of whether a recording characteristic is appropriate is equal to or smaller than 6.5 % within a certain range of levels of the writing power Pw.

As shown in Fig. 10, not only the bias power Pb but also the space formation power Ps for recording pulses 20A may be made higher than the read power Pr. This upgrades a preheating effect prior to formation of a recording mark. Moreover, the bias power Pb for the recording pulses 20 is equal to or larger than 0.4 mW or should be set to a level lower than the level of the writing power. Consequently, the change in the asymmetry value A to the change in the writing power Pw is distinguished.

One concrete example of the powers shown in Fig. 10 will be presented below. The read power Pr of 0.35 mW shall be regarded as a reference level. For recording at a speed that is one time higher than a standard speed, when the space formation power Ps, writing power Pw, cooling power Pc, and bias power Pb are set to 1.2 mW, 4.0 mW, 0.1 mW, and 1.2 mW respectively, a preferred result is obtained.

If the result of the decision made at step S102 in Fig. 7 reveals that the optical disk loaded in the drive 100 is not the organic-dye optical disk 10, the strategy determination unit 114b reads a standard recording condition associated with an acquired medium ID from the storage circuit 115, and transmits a control signal to the strategy circuit 102 according to the read standard recording condition. Based on the received control signal, the strategy circuit 102 designates a conventional writing strategy signifying that the bias power Pb for recording pulses 30 shown in Fig. 19 is equal to or smaller than the read power Pr (step S104). Consequently, the precision in recording in a high-sensitivity optical disk can be improved by suppressing an adverse effect of thermal accumulation or thermal diffusion.

The standard recording condition stored in the storage circuit 115 is a recording condition suitable for recording of information in a standard optical disk of each medium ID in the standard drive. Therefore, recording may be affected by a difference of the actual drive 100 or optical disk 10 from the other products or a disturbance. Consequently, after the writing strategy designation processing described in Fig. 7 is terminated, before predetermined recording information is recorded in the optical disk 10, the strategy circuit 102 modifies various parameter values, which are signified by the designated writing strategy, by multiple steps, produces multiple recording pulses according to predetermined test data sent from the encoder 101, and transmits the recording pulses to the laser oscillator 103. The laser oscillator 103 irradiates blue-purple laser light to the designation area 11 on the inner circumference of the optical disk 10 so as to perform test recording for recording multiple pieces of test information. Thereafter, the laser oscillator 103 irradiates blue-purple laser light of the read power Pr to the designation area 11 of the optical disk 10 so as to reproduce the multiple pieces of test information recorded in the designation area 11. The strategy determination unit 114b preferably adjusts the various parameters signified by the writing strategy according to the multiple reproduced pieces of test information. Consequently, the adverse effect of a difference of the optical disk or drive from the other products or a disturbance is minimized.

In the present embodiment, a multi-pulse type writing strategy is employed. The present embodiment is not limited to the multi-pulse type writing strategy. For example, as shown in Fig. 11, a castle type writing strategy signifying that recording pulses 20B include an intermediate pulse 23 between a top pulse 22 and a last pulse 24 and the power of the intermediate pulse 23 is set to the bias power Pb may be adopted.

One concrete example of the powers shown in Fig. 11 will be presented below. The read power Pr of 0.35 mW is regarded as a reference level. For recording at a speed that is four times (4x) higher than a standard speed, when the space formation power Ps, writing power Pw, cooling power Pc, and bias power Pb are set to 2.2 mW, 8.4 mW, 0.1 mW, and 5.0 mW respectively, a preferable result is obtained, that is, an asymmetry value exhibits, as shown in Fig. 9, a linear functional monotonous change.

Moreover, in the present embodiment, the asymmetry value A of an RF signal is detected. The present embodiment is not limited to the asymmetry value. Alternatively, a β value of the RF signal may be detected. As shown in Fig. 12, when the RF signal is ac-coupled, that is, the dc component of the RF signal is removed, if a ground level is used as a reference level, the β value is provided by an equation (2) below using a difference a between the amplitude of the RF signal derived from the longest record mark M8T and the ground level and a difference b between the amplitude of the RF signal derived from the longest space S8T and the ground level. Along with a change in the writing power Pw, the difference b between the amplitude of the RF signal derived from the longest space S8T and the ground level does not vary but the difference b between the amplitude of the RF signal derived from the longest record mark M8T and the ground level varies. Similarly to the asymmetry value A, the β value exhibits a linear functional monotonous change.

$$\beta \text{ value} = (a-b) \: / \: (a+b) \: ... \: (2)$$

In the present embodiment, based on a medium ID recorded in the disk 10, a writing strategy signifying that the bias power Pb for the recording pulses 20 is higher than the read power Pr is designated. The present embodiment is not limited to the designation. For example, power data representing powers designated for the recording pulses 20 may be recorded in advance in the designation area 11 on the inner circumference of the optical disk 10, and a writing strategy may be designated based on the power data.

As mentioned above, according to the present invention, the asymmetry value A indicates a degree of a difference between the amplitude center of an RF signal derived from the shortest record mark M2T and shortest space S2T and the amplitude center thereof derived from the longest record mark M8T and longest space S8T. The bias power Pb for the recording pulses 20 is made higher than the read power Pr. When the writing power Pw for the recording pulses 20 is changed from one level to another, although the writing power Pw is low, the longest record mark M8T can be readily formed. Consequently, along with a change in the writing power Pw, the amplitude I8L of the RF signal derived from the longest space S8T does not vary but the amplitude 18H thereof derived from the longest record mark M8T varies. Consequently, the amplitude center 18C of the RF signal derived from the longest record mark M8T and longest space S8T changes from one level to another, and the asymmetry value A exhibits a linear functional monotonous change along with the change in the writing power Pw. As a result, even when a disturbance occurs during information recording, an appropriate recording characteristic can be provided by changing the writing power Pw for the recording pulses 20 from one level to another.

Moreover, not only the bias power Pb but also the space formation power Ps for the recording pulses 20A is made higher than the read power Pr. Before a record mark is formed, a preheating effect can be upgraded. Consequently, the record mark can be more readily formed, and a more appropriate recording characteristic can be provided.

Further, the bias power Pb for the recording pulses 20 is equal to or larger than 0.4 mW and lower than the writing power. Consequently, a change in the asymmetry value A to a change in the writing power Pw is distinguished.

An appropriate recording characteristic can be readily provided.

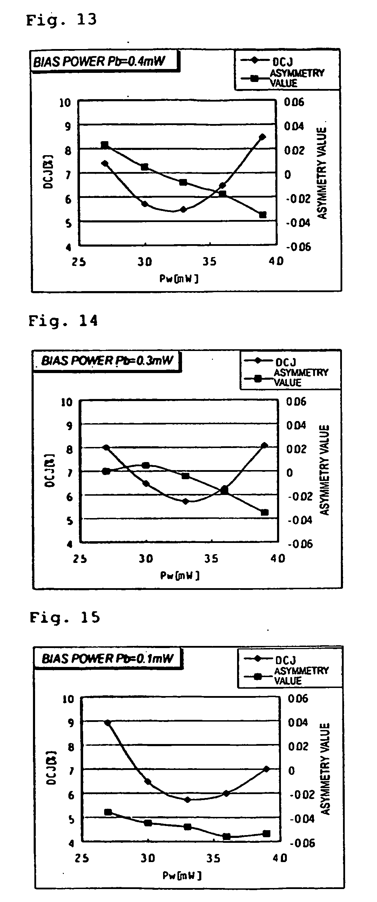

A reason why the bias power Pb for the recording pulses 20, 20A, or 20B is equal to or larger than 0.4 mW will be described using measured values shown in Fig. 13, Fig. 14, and Fig. 15 with the bias power Pb regarded as a parameter. In the drawings, the axis of abscissas indicates a writing power level [mW] ranging from 2.5 mW to 4.0 mW. The left-hand axis of ordinates indicates a jitter (DCJ [%]) ranging from 0 % to 18%, and points representing measured values of jitters are plotted. The right-hand axis of ordinates indicates an asymmetry value ranging from - 0.1 to 0.1, and points representing measured asymmetry values are plotted.

In Fig. 13, points representing values measured with the bias power Pb set to 0.4 mW are plotted. A change in the jitter to a change in the writing power [mW] is represented by a "smile" curve that indicates larger values at both ends thereof and indicates values equal to or smaller than 6.5 % in the middle thereof. The asymmetry value exhibits a linear functional decrease. Namely, the numerical values exactly like those described in conjunction with Fig. 9 have been measured. In Fig. 14, points representing values measured with the bias power Pb set to 0.3 mW are plotted. A change in the jitter to a change in the writing power [mW] is expressed with a "smile" curve that indicates larger values at both ends thereof and indicates a smaller number of values equal to or smaller than 6. 5 % in the middle thereof. Moreover, an overall change in the asymmetry value is rather small, and expressed with a curve that has an extreme value relative to the writing power of 3.0 [mW] and that swells upward. In Fig. 15, points representing values measured with the bias power Pb set to 0.1 mW are plotted. A change in the jitter to a change in the writing power [mW] is expressed with a deformed "smile" curve that indicates an extreme value at the left-hand end thereof and indicates a smaller number of values equal to or smaller than 6.5 % in the middle thereof. Moreover, the asymmetry value exhibits a linear functional change in relation to low writing power levels but does not exhibit any change in relation to high writing power levels. An overall change in the asymmetry value is very small.

From the measured values in the drawings, it is fully understood that when the bias power Pb is equal to or larger than 0.4 mW, an optimal writing power level can be searched for based on a change in the asymmetry value.

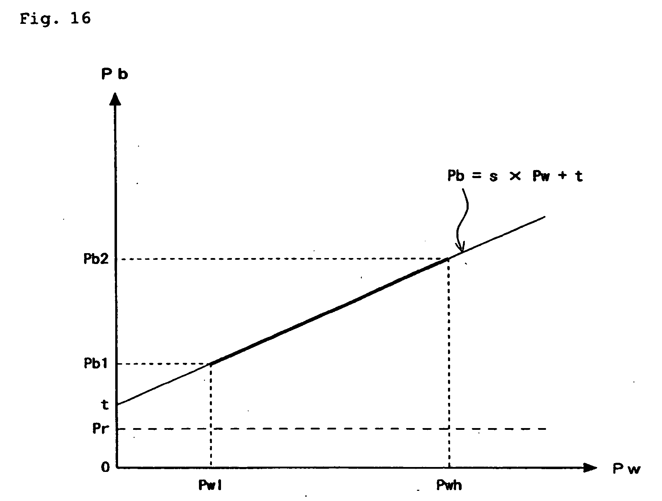

Next, referring to Fig. 16 to Fig. 18, the second embodiment of the present invention will be described below.

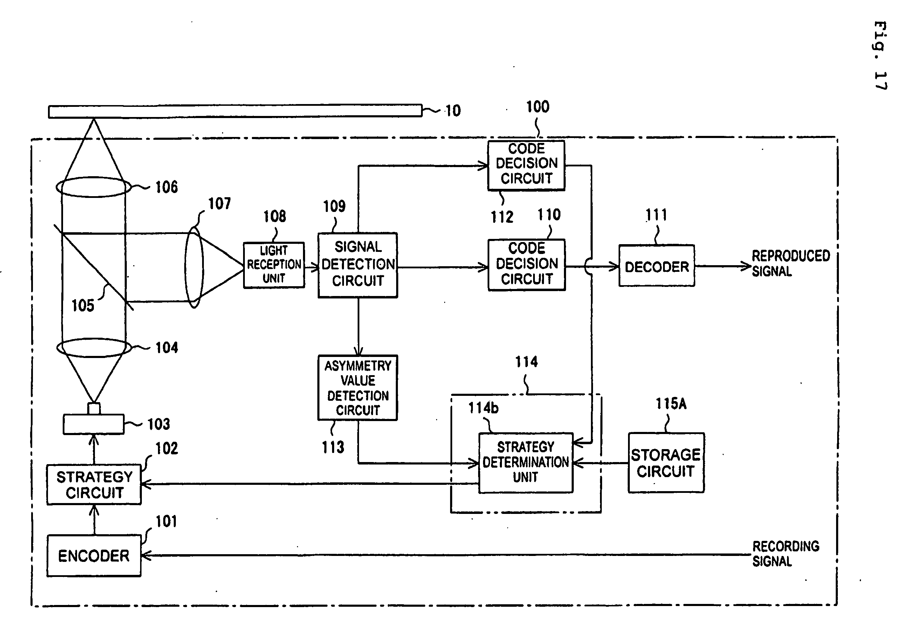

Fig. 16 is a graph expressing the relationship between bias power and writing power. Fig. 17 is a schematic block diagram of an optical information recording device. Fig. 18 is a flowchart describing writing strategy designation processing.

A difference of the second embodiment from the first embodiment is that the bias power Pb changes from one level to another as a linear function of the writing power Pw. The same reference numerals are assigned to components identical to those of the first embodiment. An iterative description will be omitted.

Specifically, the bias power Pb for the recording pulses 20 produced by the strategy circuit 102 is expressed by an equation (3) below as a linear function of the writing power Pw using a coefficient s and a constant t.

$$Pb = s \times Pw + t \ldots (3)$$

As shown in Fig. 16, the coefficient s and constant t are designated so that the bias power Pb will have a minimum level Pb1 and a maximum level Pb2 in association with the lower limit Pw1 and upper limit Pwh respectively of the writing power Pw which define a range of levels suitable for recording in the organic-dye optical disk 10. For the organic-dye optical disk 10, the minimum level Pb1 of the bias power Pb is higher than the level of the read power Pr.

As shown in Fig. 17, the coefficient s and constant t that are designated for each medium ID and that causes the bias power Pb to change within the predetermined range (Pb1≤Pb≤Pb2) shown in Fig. 16 along with a change (Pw1≤Pw≤Pwh) in the writing power Pw are, in addition to a standard recording condition, stored in a storage circuit 115A.

When predetermined recording information is recorded in the recording area 12 of the organic-dye optical disk 10, processing of step S101 and step S102 is, as described in Fig. 18, performed in the same manner as that in the first embodiment. If the result of the decision made at step S102 reveals that the optical disk loaded in the drive 100 is the organic-dye optical disk 10, the strategy determination unit 114b reads the standard recording condition, coefficient s, and constant t, which are associated with an acquired medium ID, from the storage circuit 115A. Based on the read standard recording condition, coefficient s, and constant t as well as the equation (3), the strategy determination unit 114b transmits a control signal to the strategy circuit 102. Based on the received control signal, the strategy circuit 102 designates a writing strategy signifying that the bias power Pb for the recording pulses 20 changes, as shown in Fig. 16, as a linear function of the writing power Pw and is higher than the read power Pr (step S105). Consequently, even when the bias power Pb changes along with a change in the writing power Pw, the bias power Pb for the recording pulses 20 gets higher than the read power Pr.

If the result of the decision made at step S102 in Fig. 18 reveals that the optical disk loaded in the drive 100 is not the organic-dye optical disk 10, the strategy determination unit 114b reads the standard recording condition, coefficient s, and constant t, which are associated with an acquired medium ID, from the storage circuit 115A, and transmits a control signal to the strategy circuit 102 on the basis of the read standard recording condition, coefficient s, and constant t as well as the equation (3). Based on the received control signal, the strategy circuit 102 designates a conventional writing strategy signifying that the bias power Pb for the recording pulses 30 is, as shown in Fig. 16, equal to or lower than the read power Pr (step S106). In the present embodiment, the writing strategy signifying that the bias power Pb for the recording pulses 30 is equal to or lower than the read power Pr is designated as it is conventionally. However, the present embodiment is not limited to the writing strategy. A writing strategy signifying that the bias power Pb is higher than the read power Pr may be designated as it is for the organic-dye optical disk 10.

Similarly to the first embodiment, as shown in Fig. 10, not only the bias power Pb but also the space formation power Ps for the recording pulses 20A may be made higher than the read power Pr. In this case, before a record mark is formed, a preheating effect can be upgraded. Moreover, the coefficient s and constant t are preferably designated so that the minimum level Pb1 of the bias power Pb for the recording pulses 20 will be equal to or larger than 0.4 mW and the maximum level Pb2 thereof will be equal to or smaller than the upper limit Pwh of the writing power Pw (0.4 mW$\leq$Pb1 and Pb2<Pwh). Consequently, a change in the asymmetry value A to a change in the writing power Pw is distinguished.

Moreover, in the present embodiment, based on a medium ID recorded in the optical disk 10, the coefficient s and constant t recorded in the storage circuit 115A are read, and a writing strategy signifying that the bias power Pb for the recording pulses 20 is higher than the read power Pr is designated. The present embodiment is not limited to the medium ID. Aside from the medium ID, bias data including the coefficient s and constant t may be recorded in advance in the designation area 11 on the inner circumference of the optical disk 10. A writing strategy may be designated based on the bias data and the equation (3).

Further, similarly to the first embodiment, the present embodiment is not limited to a case where a multi-pulse type write strategy is employed. Alternatively, as shown in Fig. 11, a castle type writing strategy may be adopted. Moreover, the present embodiment is not limited to a case where the asymmetry value A of an RF signal is detected. Alternatively, a β value of the RF signal may be detected.

As mentioned above, according to the present invention, even when the bias power Pb for the recording pulses 20 changes as a linear function of the writing power Pw, as long as the coefficient s and constant t are designated appropriately, the same advantage as that of the first embodiment can be provided.

The configuration and actions of the present invention are not limited to those of the embodiments.

## Claims

1. An optical information recording device (100) that forms record marks and spaces by irradiating laser light of a predetermined wavelength to an optical information recording medium (10) for which an organic dye exhibiting a predetermined absorption factor with respect to light having the wavelength of 405 nm is used, and that thus records information, comprising:

   a recording power control means that, for recording of information, controls the power of the laser light using writing power ($P_w$) required for forming record marks, space formation power ($P_s$) that is required for forming spaces and is lower than the writing power, read power ($P_r$) required for reproducing information recorded in the optical information recording medium, and bias power ($P_b$) that is applied intermittently when forming a record mark between pulses having the writing power, wherein the bias power is higher than the read power, wherein the recording power control means controls cooling power ($P_c$) that is applied immediately following the last pulse having a writing power ($P_w$) when forming a mark and that is required for preventing propagation of heat dissipated from record marks, **characterised in that** the cooling power is lower than the read power.

2. The optical information recording device according to Claim 1, wherein the space formation power is higher than the read power.

3. The optical information recording device according to Claim 1 or 2, wherein the bias power is equal to or larger than 0.4 mW and is lower than the writing power.

4. An optical information recording method for forming record marks and spaces by irradiating laser light of a predetermined wavelength to an optical information recording medium for which an organic dye exhibiting a predetermined absorption factor with respect to light having the wavelength of 405 nm is used, and for thus recording information, wherein:

   for recording of information, the power of the laser light is controlled using writing power ($P_w$) required for forming record marks, space formation power ($P_s$) that is required for forming spaces and is lower than the writing power,

read power ($P_r$) required for reproducing information recorded in the optical information recording medium, and bias power ($P_b$) that is applied intermittently when forming a record mark between pulses having the writing power, wherein the bias power is higher than the read power,

wherein the power of the laser light is also controlled using cooling power ($P_c$) from previous page that is required for preventing propagation of heat dissipated from record marks, **characterised in that** the cooling power is lower than the read power.

5. The optical information recording method according to Claim 4, wherein the space formation power is higher than the read power.

6. The optical information recording method according to Claim 4 or 5, wherein the bias power is equal to or larger than 0.4 mW and is lower than the writing power.


**Patentansprüche**

1. Optische Informationsaufzeichnungsvorrichtung (100), die Aufzeichnungsmarklerungen und Aussparungen durch Strahlen von Laserlicht mit einer vorbestimmten Wellenlänge auf einen optischen Informationsaufzeichnungsträger (10), für den ein organischer Farbstoff, der einen vorbestimmten Absorptionsfaktor in Bezug zu Licht aufweist, das eine Wellenlänge von 405 nm hat, verwendet wird, bildet und **dadurch** Information aufzeichnet, umfassend:

ein Aufzeichnungsleistungssteuermittel, das zum Aufzeichnen von Information die Leistung des Laserlichts steuert, indem es Schreibleistung ($P_w$) verwendet, die zum Bilden von Aufzeichnungsmarkierungen erforderlich ist, Aussparungsbildungsleistung ($P_s$), die zum Bilden von Aussparungen erforderlich ist und niedriger ist als die Schreibleistung ($P_w$), Leseleistung ($P_r$), die zum Wiedergeben von Information, die in dem optischen Informationsaufzeichnungsträger aufgezeichnet ist, erforderlich ist, und Vorspannleistung (Pb), die intermittierend beim Bilden einer Aufzeichnungsmarkierung zwischen Impulsen, die die Schreibleistung haben, angewandt wird, wobei die Vorspannleistung größer ist als die Leseleistung, wobei die Aufzeichnungsleistungssteuermittel Kühlleistung ($P_c$) steuern, die unmittelbar nach dem letzten Impuls, der eine Schreibleistung ($P_w$) hat, angewandt wird, wenn eine Markierung gebildet wird, und die erforderlich ist, um das Ausbreiten der Hitze, die von den Aufzeichnungsmarkierungen abgeleitet wird, zu vermeiden, **dadurch gekennzeichnet, dass** die Kühlleistung niedriger ist als die Leseleistung.

2. Optische Informationsaufzeichnungsvorrichtung nach Anspruch 1, wobei die Aussparungsbildungsleistung größer ist als die Leseleistung.

3. Optische Informationsaufzeichnungsvorrichtung nach Anspruch 1 oder 2, wobei die Vorspannleistung gleich oder größer ist als 0,4 mW und niedriger ist als die Leseleistung.

4. Optisches Informationsaufzeichnungsverfahren zum Bilden von Aufzeichnungsmarkierungen und Aussparungen durch Strahlen von Laserlicht mit einer vorbestimmten Wellenlänge auf einen optischen Informationsaufzeichnungsträger, für den ein organischer Farbstoff, der einen vorbestimmten Absorptionsfaktor in Bezug zu Licht, das eine Wellenlänge von 405 nm hat, verwendet wird, um derart Information aufzuzeichnen, wobei:

zum Aufzeichnen von Information die Leistung des Laserlichts gesteuert wird, indem Schreibleistung ($P_w$), die erforderlich ist, um Aufzeichnungsmarkierungen zu bilden, Aussparungsbildungsleistung ($P_s$), die erforderlich ist, um Aussparungen zu bilden und die niedriger ist als die Schreibleistung, Leseleistung ($P_r$), die zum Wiedergeben von Information, die in dem optischen Informationsaufzeichnungsträger aufgezeichnet ist, erforderlich ist, und Vorspannleistung ($P_b$), die intermittierend angewandt wird, wenn eine Aufzeichnungsmarkierung gebildet wird, zwischen Impulsen, die die Schreibleistung haben, verwendet wird, wobei die Vorspannleistung größer ist als die Leseleistung, wobei die Leistung des Laserlichts auch gesteuert wird, indem Kühlleistung ($P_c$) verwendet wird, die unmittelbar nach dem letzten Impuls, der eine Schreibleistung ($P_w$) hat, angewandt wird, wenn eine Markierung gebildet wird, und die erforderlich ist, um das Ausbreiten von Hitze, die von den Aufzeichnungsmarkierungen abgeleitet wird, zu vermeiden, **dadurch gekennzeichnet, dass** die Kühlleistung niedriger ist als die Leseleistung.

5. Optisches Informationsaufzeichnungsverfahren nach Anspruch 4, wobei die Aussparungsbildungsleistung größer ist als die Leseleistung.

**6.** Optisches Informationsaufzeichnungsverfahren nach Anspruch 4 oder 5, wobei die Vorspannleistung gleich oder größer ist als 0,4 mW und niedriger ist als die Schrelbleistung.

**Revendications**

**1.** Dispositif d'enregistrement d'informations optique (100) qui forme des marques d'enregistrement et des espaces en rayonnant une lumière laser d'une longueur d'onde prédéterminée vers un support d'enregistrement d'informations optique (10) pour lequel un colorant organique présentant un facteur d'absorption prédéterminé par rapport à une lumière ayant la longueur d'onde de 405 nm est utilisé, et qui enregistre ainsi des informations, comprenant :

des moyens de commande de puissance d'enregistrement qui, pour l'enregistrement d'informations, commandent la puissance de la lumière laser en utilisant une puissance d'écriture ($P_w$) nécessaire pour former des marques d'enregistrement, une puissance de formation d'espace ($P_a$) qui est nécessaire pour former des espaces et qui est inférieure à la puissance d'écriture, une puissance de lecture ($P_r$) nécessaire pour reproduire des informations enregistrées sur le support d'enregistrement d'informations optique, et une puissance de polarisation ($P_b$) qui est appliquée de manière intermittente lors de la formation d'une marque d'enregistrement entre des impulsions ayant la puissance d'écriture, dans lequel la puissance de polarisation est supérieure à la puissance de lecture,
dans lequel les moyens de commande de puissance d'enregistrement commandent la puissance de refroidissement ($P_c$) qui est appliquée immédiatement à la suite de la dernière impulsion ayant une puissance d'écriture ($P_w$) lors de la formation d'une marque et qui est nécessaire pour empêcher la propagation de la chaleur dissipée par les marques d'enregistrement, **caractérisé en ce que** la puissance de refroidissement est inférieure à la puissance de lecture.

**2.** Dispositif d'enregistrement d'informations optique selon la revendication 1, dans lequel la puissance de formation d'espace est supérieure à la puissance de lecture.

**3.** Dispositif d'enregistrement d'informations optique selon la revendication 1 ou 2, dans lequel la puissance de polarisation est égale ou supérieure à 0,4 mW et est inférieure à la puissance d'écriture.

**4.** Procédé d'enregistrement d'informations optique pour former des marques d'enregistrement et des espaces en rayonnant une lumière laser d'une longueur d'onde prédéterminée vers un support d'enregistrement d'informations optique pour lequel un colorant organique présentant un facteur d'absorption prédéterminé par rapport à une lumière ayant la longueur d'onde de 405 nm est utilisé, et pour enregistrer ainsi des informations, dans lequel :

pour enregistrer des informations, la puissance de la lumière laser est commandée en utilisant une puissance d'écriture ($P_w$) nécessaire pour former des marques d'enregistrement, une puissance de formation d'espace ($P_s$) qui est nécessaire pour former des espaces et qui est inférieure à la puissance d'écriture, une puissance de lecture ($P_r$) nécessaire pour reproduire des informations enregistrées sur le support d'enregistrement d'informations optique, et une puissance de polarisation ($P_b$) qui est appliquée de manière intermittente lors de la formation d'une marque d'enregistrement entre des impulsions ayant la puissance d'écriture, dans lequel la puissance de polarisation est supérieure à la puissance de lecture,
dans lequel la puissance de la lumière laser est également commandée en utilisant une puissance de refroidissement ($P_c$) qui est appliquée immédiatement à la suite de la dernière impulsion ayant une puissance d'écriture ($P_w$) lors de la formation d'une marque et qui est nécessaire pour empêcher la propagation de la chaleur dissipée par les marques d'enregistrement, **caractérisé en ce que** la puissance de refroidissement est inférieure à la puissance de lecture.

**5.** Procédé d'enregistrement d'informations optique selon la revendication 4, dans lequel la puissance de formation d'espace est supérieure à la puissance de lecture.

**6.** Procédé d'enregistrement d'informations optique selon la revendication 4 ou 5, dans lequel la puissance de polarisation est égale ou supérieure à 0,4 mW et est inférieure à la puissance d'écriture.

## Fig. 1

Fig. 2

Fig. 3

RF SIGNAL

Fig. 4

Fig. 5A

Fig. 5B

Fig. 6A

P3T

Fig. 6B

POWER

Pw

22    24

20

21

Pb
Pr
Ps
Pc

25

0                                      TIME

Fig. 7

INITIATE WRITING STRATEGY
DESIGNATION PROCESSING

ACQUIRE MEDIUM ID ——S101

S104

DESIGNATE WRITING
STRATEGY        No    IS IT
PREDETERMINED        ——S102
MEDIUM ID?

Yes

DESIGNATE WRITING        ——S103
STRATEGY

TERMINATE WRITING STRATEGY
DESIGNATION PROCESSING

Fig. 8

RF SIGNAL

18H

18C

12H

12L

18L

GND

Fig. 9

ASYMMETRY VALUE

JITTER

JITTER

ASYMMETRY VALUE A

6. 5%

WRITING POWER

Fig. 10

Fig. 11

Fig. 12

Fig. 13

BIAS POWER Pb=0.4mW

Fig. 14

BIAS POWER Pb=0.3mW

Fig. 15

BIAS POWER Pb=0.1mW

Fig. 16

Fig. 17

Fig. 18

```
┌─────────────────────────────┐
│   INITIATE WRITING STRATEGY  │
│    DESIGNATION PROCESSING    │
└─────────────────────────────┘
              │
              ▼
    ┌───────────────────┐
    │  ACQUIRE MEDIUM ID │──── S101
    └───────────────────┘
              │
              ▼
                    ◇
         No      ╱     ╲
┌──────────────┐ ╱  IS IT   ╲
│  DESIGNATE   │◄─PREDETERMINED─── S102
│   WRITING    │ ╲ MEDIUM ID? ╱
│  STRATEGY    │  ╲         ╱
└──────────────┘    ◇
   S106              │ Yes
      │              ▼
      │    ┌───────────────────┐
      │    │    DESIGNATE       │──── S105
      │    │    WRITING         │
      │    │    STRATEGY        │
      │    └───────────────────┘
      │              │
      └──────────────┤
                     ▼
    ┌─────────────────────────────┐
    │ TERMINATE WRITING STRATEGY   │
    │    DESIGNATION PROCESSING    │
    └─────────────────────────────┘
```

Fig. 19

22

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003323717 A

- US 2006223004 A1